**Europäisches Patentamt**

**European Patent Office**

**Office européen des brevets**

(11) Veröffentlichungsnummer : **0 009 673**
**B1**

(12) **EUROPÄISCHE PATENTSCHRIFT**

(45) Veröffentlichungstag der Patentschrift :
**22.09.82**

(21) Anmeldenummer : **79103397.0**

(22) Anmeldetag : **12.09.79**

(51) Int. Cl.³ : **G 03 B 31/00**, G 03 B 17/50,
G 11 B 23/44

(54) **Aufnahme- und/oder Wiedergabegerät für mit einem magnetisierbaren Bereich versehene Informationsträger.**

(30) Priorität : **14.09.78 DE 2840051**
**14.09.78 DE 2840052**

(43) Veröffentlichungstag der Anmeldung :
**16.04.80 (Patentblatt 80/08)**

(45) Bekanntmachung des Hinweises auf die Patenterteilung : **22.09.82 Patentblatt 82/38**

(84) Benannte Vertragsstaaten :
**AT BE CH FR GB IT NL SE**

(56) Entgegenhaltungen :
**DE A 2 329 157**
**DE A 2 720 575**
**DE B 2 329 156**
**US A 3 185 776**
**US A 3 883 238**
**US A 3 897 145**

(73) Patentinhaber : **AGFA-GEVAERT Aktiengesellschaft**
**D-5090 Leverkusen 1 (DE)**

(72) Erfinder : **Stemme, Otto, Dr., Dipl.-Phys.**
**Heideckstrasse 29**
**D-8000 München 19 (DE)**
Erfinder : **Staudacher, Frank, Dr., Dipl.-Kfm.**
**Thienhausener Strasse 31**
**D-5657 Haan/Rhld. (DE)**
Erfinder : **Lermann, Peter, Dr., Dipl.-Ing.**
**D-8152 Naring 106 1/2**
**Westerham, Post Feldkirchen (DE)**
Erfinder : **Wagensonner, Eduard, Ing. grad.**
**Eichenstrasse 1**
**D-8011 Aschheim (DE)**
Erfinder : **Schultheiss, Karl-Heinz**
**Ahornring 12**
**D-8012 Taufkirchen (DE)**

Imprimerie Jouve, 18, rue St-Denis, 75001 Paris, France

# Aufnahme- und/oder Wiedergabegerät für mit einem magnetisierbaren Bereich versehene Informationsträger

Die Erfindung betrifft eine Aufnahme- und/oder Wiedergabegerät für mit einem magnetisierbaren Bereich versehene Informationsträger, vorzugsweise für Stehbildinformationsträger, mit einer Haltevorrichtung zur reproduzierbaren Halterung des Informationsträgers mit einer mehrere Tonköpfe aufweisenden Tonkopfeinrichtung zum Schreiben bzw. Lesen von digitalen oder analogen Signalen des Informationsträgers.

Ein solches, aus der US-A-3 897 145 bekanntes Aufnahme- und/oder Wiedergabegerät weist ein Antriebssystem auf, durch das vier um jeweils 90° versetzte Magnetköpfe, die zusammen ein Magnetsystem bilden, um eine gemeinsame Achse gedreht werden. Jeweils zwei gegenüberliegende Magnetköpfe, die um 180° versetzt sind, sind einem ersten magnetisierbaren Bereich auf der Frontseite eines Diarahmens zugeordnet. Die beiden übrigen, um 180° versetzten Magnetköpfe sind einem zweiten, auf der Rückseite des Diapositivrahmens angeordneten magnetisierbaren Bereich zugeordnet. Die Magnetköpfe schreiben auf dem jeweiligen magnetisierbaren Bereich Kreissegmentbahnen. Um eine vorgegebene Anzahl von Schreib- und Lesespuren zu erzeugen, ist es notwendig, das vierköpfige Magnetsystem zusätzlich linear zu bewegen. Hierzu dienen spindelartige Führungs- und Transportmittel. Eine solche, eine Vielzahl von Kreissegmentbahnen erzeugende bzw. abtastende Magnetkopfanordnung ist aufwendig, geräumig und kostspielig. Infolge der kreissegmentartigen Ausbildung der Tonspuren muß der magnetisierbare Bereich entsprechend breit ausgebildet sein. Ein Teil dieses magnetisierbaren Bereiches wird daher nicht ausgenutzt.

Aus der US-A-3 185 776 ist ein Bild- und Tonprojektor bekannt, bei dem eine Bildvorlage auf gegenüberliegenden Seiten des Bildträgers einen magnetisierbaren Bereich aufweist. Zwei die eine bzw. andere magnetisierbare Seite abtastende Tonköpfe werden mittels einer Spindel längs der Magnetspur bewegt. Mit Hilfe eines aufwendigen Klinkenschaltwerkes sind die beiden Tonköpfe senkrecht zur Achse der Spindelbewegung stufenweise fortschaltbar. Die Tonköpfe werden abwechselnd nacheinander eingeschaltet. Das Antriebssystem der beiden Tonköpfe arbeitet stets in der gleichen Richtung. Nachteilig sind bei der bekannten Abtast- und Tonwiedergabeeinrichtung aufwendige mechanische Steuervorrichtungen zur Querbewegung des Tonkopfsystems.

Aus der DE-A-2 329 457 ist ein Dia-Tonprojektor bekannt, bei dem auf den einzelnen Diarahmen mit Hilfe einer Klammer Magnetbandstreifen zusammen mit elastischen Streifen aufgebracht sind. Auf dem Magnetband ist eine einzige Tonspur vorgesehen.

Der Erfindung liegt die Aufgabe zugrunde, ein Aufnahme- und/oder Wiedergabegerät der eingangs genannten Art zu schaffen, welches mit einfachen Mitteln und geringem Materialaufwand eine störunanfällige Aufzeichnung bzw. Wiedergabe von digitalen und analogen Toninformationen ermöglichen soll, wobei die Massenträgheit der der Beschleunigung unterworfenen Teile möglichst gering gehalten werden soll. Auch soll bei vorgegebener Größe der Magnettonschicht eine optimale Tonspurlänge erzielt werden.

Gelöst wird die Aufgabe dadurch, daß jeder Tonkopf der Tonkopfeinrichtung jeweils einer Schreib- bzw. Lesespur zugeordnet ist, daß die Tonkopfeinrichtung mittels einer linearen Transportvorrichtung über dem magnetisierbaren Bereich des Informationsträgers stets längs der gleichen Bahn hin- und herbewegbar ist und daß eine elektronische Steuer- und Auswerteschaltung vorgesehen ist, durch die zum aufeinanderfolgenden Aufzeichnen bzw. Abtasten der einzelnen Tonspuren nach jeder Bewegungsumkehr der Tonkopfeinrichtung vom zuvor wirksam geschalteten Tonkopf auf den jeweils nächstfolgenden Tonkopf umgeschaltet wird. Hieraus ergibt sich der Vorteil, daß auf der Magnettonschicht in einer vorgegebenen Reihenfolge nacheinander in jeweils abwechselnder Richtung voneinander getrennte Tonspuren aufgezeichnet bzw. abgetastet werden. Die Antriebsvorrichtung bewegt den Informationsträger stets längs der gleichen Bahn hin und her. Eine Querverschiebung der Tonkopfeinrichtung ist nicht erforderlich, woraus sich der Vorteil ergibt, daß die eine nicht zu vernachlässigende Massenträgheit aufweisenden Teile der Aufzeichnungs- und Wiedergabeeinrichtung nur zu Beginn und am Ende des Arbeitszyklus beschleunigt zu werden brauchen. Beim Tonspurenwechsel erfolgt keine Bewegung der Tonkopfeinrichtung senkrecht zur Tonspurrichtung.

Gemäß weiterer Ausbildung weist die Linear-Transportvorrichtung eine stets in einer Drehrichtung arbeitende Antriebsvorrichtung, mindestens zwei in jeweils entgegengesetzter Richtung durch die Antriebsvorrichtung bewegbare Transportmittel und eine Kupplungsvorrichtung auf, durch die die Tonkopfeinrichtung abwechselnd mit dem einen oder anderen Transportmittel kuppelbar ist. Die Massenträgheit der bei Richtungswechsel beschleunigten Teile kann so gering gehalten werden, daß unmittelbar nach dem Richtungswechsel die Tonkopfeinrichtung die vorgegebene Transport- bzw. Aufzeichnungs- bzw. Wiedergabegeschwindigkeit der Transportmittel aufweist.

Gemäß weiterer Ausgestaltung weist die Linear-Transporteinrichtung eine durch einen Motor angetriebene Endlosschleife auf, wobei die Kupplungseinrichtung einen in Höhe des einen Schleifenteiles angeordnetes erstes elektromagnetisches Kupplungsteil sowie ein in Höhe des in entgegengesetzter Richtung laufenden Schleifenteiles angeordnetes zweites elektromagnetisches Kupplungsteil aufweist. Hierbei kann die Endlosschleife als Schnurzug, als Kette oder als Band ausgebildet sein.

In vorteilhafter Weise ist das Endlosband zumindest teilweise aus flexiblem, magnetisch leitfähigem Material ausgebildet.

Gemäß weiterer Ausbildung ist die Tonkopf- und Kupplungseinrichtung mit Schaltfühlern versehen, die bei Erreichen des Tonaufzeichnungsträgerrandes einen Schalt- bzw. Steuerimpuls abgeben.

In vorteilhaftet Weise ist ein beim Einführen des Informationsträgers in das Aufnahme- und/oder Wiedergabegerät betätigbarer Startschalter vorgesehen, durch den die Steuer- und Auswerteschaltung aktiviert wird.

In vorteilhafter Weise weist die Auswerte- und Steuerschaltung einen Digitalzähler auf, dessen maximaler Zählinhalt gleich der Anzahl der nebeneinanderstehenden Aufzeichnungs- und Wiedergabetonspuren ist.

In vorteilhafter Weise ist der Takteingang des Digitalzählers über eine ODER-Verknüpfung mit zwei Steuerschaltern verbunden, von denen jeder eines der beiden Tonspurenden signalisiert.

Gemäß weiterer Ausbildung sind die Ausgänge des Digitalzählers über eine der Anzahl der Tonspuren entsprechende Anzahl von Auswertegattern mit im Stromkreis der einzelnen Tonspulen befindlichen steuerbaren Halbleiterschaltern verbunden.

Die den geradzahligen Tonspuren zugeordneten benachbarten Auswertegatter und die den ungeradzahligen Tonspuren zugeordneten benachbarten Auswertegatter sind jeweils über weitere Verknüpfungsstufen mit je einem steuerbaren, den Elektromagneten der Kupplungsvorrichtung beeinflussenden Halbleiterschalter verbunden.

In vorteilhafter Weise sind die weiteren Verknüpfungsstufen mittels des bei eingeführtem Stehbildinformationsträger betätigtem Startschalters vorbereitend durchsteuerbar.

Die Kupplungswirkung der Kupplungsvorrichtung wird bei vorzeitigem Herausnehmen des Stehbild-Informationsträgers aus dem Aufnahme- bzw. Wiedergabegerät in vorteilhafter Weise mit Hilfe eines durch die Tonkopfeinrichtung betätigbaren Endabschalters aufgehoben, wenn die Tonkopfeinrichtung eine vorgegebene Anfangsstellung erreicht hat.

Gemäß weiterer Ausbildung ist bei betätigtem Endabschalter und bei unbetätigtem Startschalter eine im Falle der Betätigung beider Schalter durchgesteuerte Torstufe gesperrt und die Bestromung der Kupplungseinrichtung unterbrochen. Die Tonkopfeinrichtung sowie die Kupplungsvorrichtung sind auf einem gemeinsamen Schlitten angeordnet.

Von den Zuleitungen zu den steuerbaren Halbleiterschaltern der Tonkopfspulen führt in vorteilhafter Weise je eine Steuerverbindung zu einem ODER-Gatter, das mit einer monostabilen Kippstufe verbunden ist, durch die während jedes Spurenwechsels über eine kurze Zeitspanne die Aufzeichnung bzw. Wiedergabe unterbrochen wird.

Ein Bedürfnis für ein solches Aufnahme- und/ oder Wiedergabegerät besteht beispielsweise auf dem Gebiet der Sofortbildfotografie. Es sind zahlreiche Ausführungsformen von Sofortbildkameras bekannt, wobei sich in letzter Zeit das sogenannte Monoblattverfahren durchgesetzt hat, bei dem Filmverbände benutzt werden, die Entwicklerbeutel und Pastenfalle auch noch im entwickelten Zustand enthalten. Die Bilder weisen entsprechend verbreitere Ränder auf, die teilweise zur Beschriftung geeignet sind. Dies gilt auch für im Trennblattverfahren hergestellte Sofortbilder. Gemäß einer besonders bevorzugten Ausgestaltung wird das Aufnahme- und/oder Wiedergabegerät in einer fotografischen Sofortbildkamera verwendet, wobei die Tonkopfeinrichtung mittels einer Spindel vorzugsweise an einem Bildrand auf der Vorder- und/oder Rückseite des Sofortbildträgers, auf dem sich der magnetisierbare Bereich befindet, entlangführbar ist, wobei die Tonkopfeinrichtung elektro- oder federmotorisch angetrieben ist und wobei die Drehrichtung des Elektro- oder Federmotors mittels eines Endschalters nach dem ersten Lauf der Tonkopfeinrichtung entlang des Bildrandes umkehrbar ist, wobei bei der Richtungsumkehr das elektromagnetische Schreib- bzw. Lesespursignal auf einen weiteren Tonkopf der Tonkopfeinrichtung und bei Erreichen der letzten Schreib- bzw. Lesespur wieder auf den ersten Tonkopf geschaltet wird.

In vorteilhafter Weise ist im Kameragehäuse ein Schlitz vorgesehen, dessen Wände mit wenigstens einem Permanentmagneten versehen sind und wobei der Schiltz breiter als der verwendbare Bildträger stark und tiefer als der magnetisierbare Bereich des letzteren breit ist.

Im folgenden wird die Erfindung anhand zweier in den Figuren 1 bis 9 dargestellten Ausführungsbeispiele beschrieben. Es zeigen :

Figuren 1 bis 5 in schematischer Darstellung einen Teil eines Aufnahme- und/oder Wiedergabegerätes,

Figur 2 die nebeneinander verlaufenden Tonspuren und

Figuren 3 und 4 eine Schaltungsanordnung zur Steuerung der Kupplungseinrichtung und zur Steuerung der einzelnen Tonköpfe.

Figur 6 eine teilweise aufgeschnittene Rückansicht einer gemäß der Erfindung ausgestatteten Kamera.

Figur 7 eine teilweise aufgeschnittene Seitenansicht des Gegenstandes von Figur 6

Figur 8 einen vergrößerten Ausschnitt III aus Figur 7

Figur 9 eine Aufsicht auf einen Sofortbildträger zur Verwendung in der erfindungsmäßen Kamera nach Fig. 6.

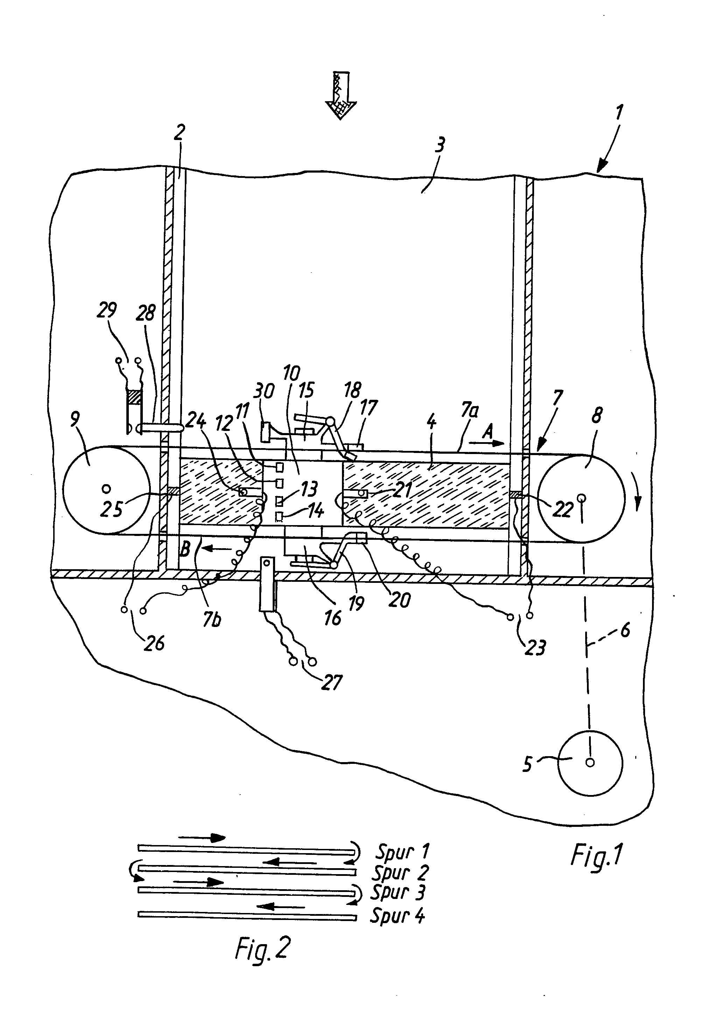

Gemäß Figur 1 ist mit 1 eine Aufzeichnungs- und Wiedergabeeinrichtung bezeichnet, die einen Aufnahmeteil 2 für ein Stehbild 3 aufweist. Das Stehbild 3 enthält eine Magnettonschicht 4. In dem Aufzeichnungs- und Wiedergabegerät ist ein Elektromotor 5 vorgesehen, der über eine getriebliche Verbindung 6 mit einem Endlosband 7 und Umlenkrollen 8 und 9 zusammenwirkt. Das Endlosband 7 ist vorzugsweise mit einer flexiblen magnetisch leitfähigen Schicht belegt. Der Teil 7a des Endlosbandes 7 führt eine Linearbewegung in Pfeilrichtung A und der Teile 7b des Endlosbandes 7 in Pfeilrichtung B aus.

Eine Tonkopfeinrichtung ist mit 10 bezeichnet. Sie enthält einzelne Tonköpfe 11, 12, 13, 14, die nebeneinander angeordnet sind. Zur besseren Raumausnutzung kann gemäß einer anderen Ausführungsform die Anordnung der Tonköpfe derart getroffen sein, daß z.B. die ungeradzahligen Tonköpfe auf der linken Seite und die geradzahligen Tonköpfe auf der rechten Seite der Tonkopfeinrichtung angeordnet sind. Der Anfang der ungeradzahligen Tonspuren liegt dann auf der linken und der Anfang auf der geradzahligen Tonspuren auf der rechten Seite.

In Höhe des Endlosschleifenteiles 7a ist ein erster Elektromagnet 15 angeordnet, dessen Anker mit 18 bezeichnet ist. Ein Teil 17 dient als Gegenlager für den Anker 18, der den Schleifenteil 7a bei erregtem Elektromagnet 15 zangenartig ergreift. Durch die magnetisch leitfähige Ausbildung der Schleife 7 wird bei erregtem Elektromagnet eine sichere Kupplung hergestellt.

Gemäß einer anderen Ausführungsform kann der Kern des Elektromagneten 15 direkt unterhalb bzw. oberhalb des magnetisch leitfähigen Schleifenteiles 7a angeordnet sein. Der Kern weist dann zweckmäßigerweise eine an den Querschnitt der Schleife 7 angepaßte Aussparung auf.

Bei nicht aus magnetisch leitfähigem Material bestehender Schleife 7 wird durch entsprechende Ausbildung der Zange 18, 17 ebenfalls eine gute Kupplungswirkung erzielt.

Dem Schleifenteil 7b ist ein zweiter Elektromagnet 16 zugeordnet, dessen Anker 19 bezeichnet ist. Ein Gegenstück zum Anker 19 ist mit 20 bezeichnet.

Die Tonkopfeinrichtung weist außerdem einen Schaltfühler 21 auf, der mit einem Kontaktstück 22 am Rande des Stehbildes zusammenarbeitet. Dieses Kontaktstück 22 ist gehäusefest angeordnet. Der Fühler 21 und das Kontaktstück 22 bilden einen Fühlschalter 23. Auf der entgegengesetzten Seite der Tonkopfeinrichtung 10 ist ein weiterer Fühlschalter 24 vorgesehen, der mit einem gehäusefestem Kontaktstück 25 am entgegengesetzten Rand des Stehbildes 3 zusammenarbeitet. Der aus den beiden Kontaktstücken gebildete Schalter ist mit 26 bezeichnet.

Am unteren Rand der Aufnahme 2 ist gehäusefest ein Schalter 27 vorgesehen, der im Ruhestand geschlossen ist und der beim Einführen eines Stehbildes mit Tonschicht 4 geöffnet wird.

Im linken Aufnahmebereich ist ein Schaltstift 28 vorgesehen, durch den ein Endabschalter 29 betätigbar ist. Der Schaltstift 28 ist durch ein Teil 30 der Tonkopfeinrichtung 10 betätigbar.

In Figur 2 sind schematisch die einzelnen nacheinander von den Tonköpfen 11 bis 14 erzeugten Tonspuren 1 bis 4 dargestellt.

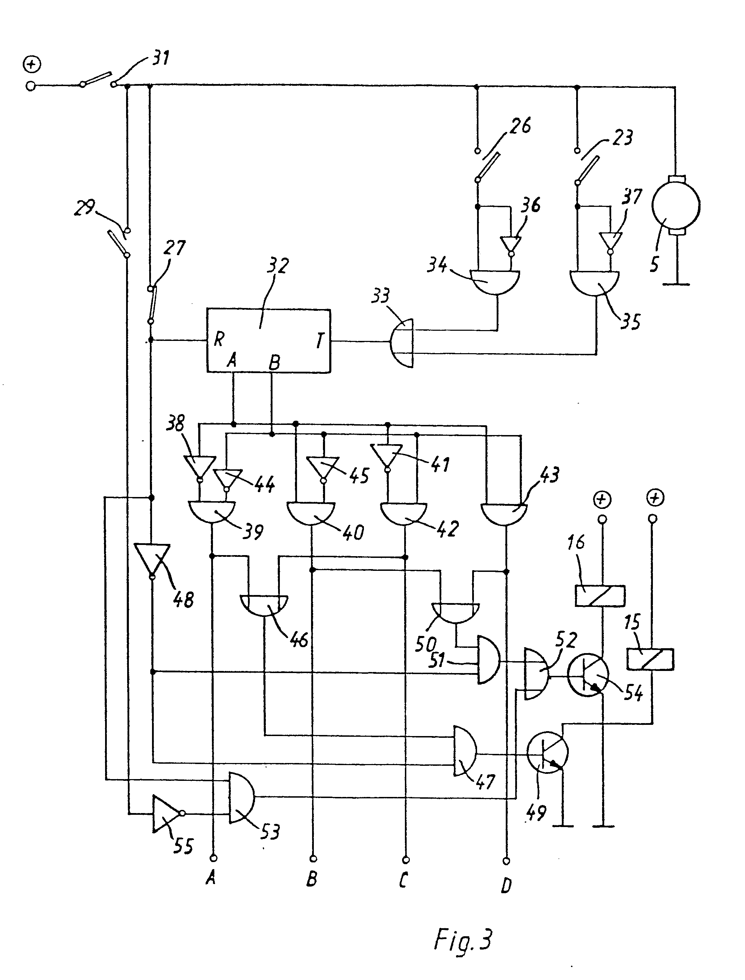

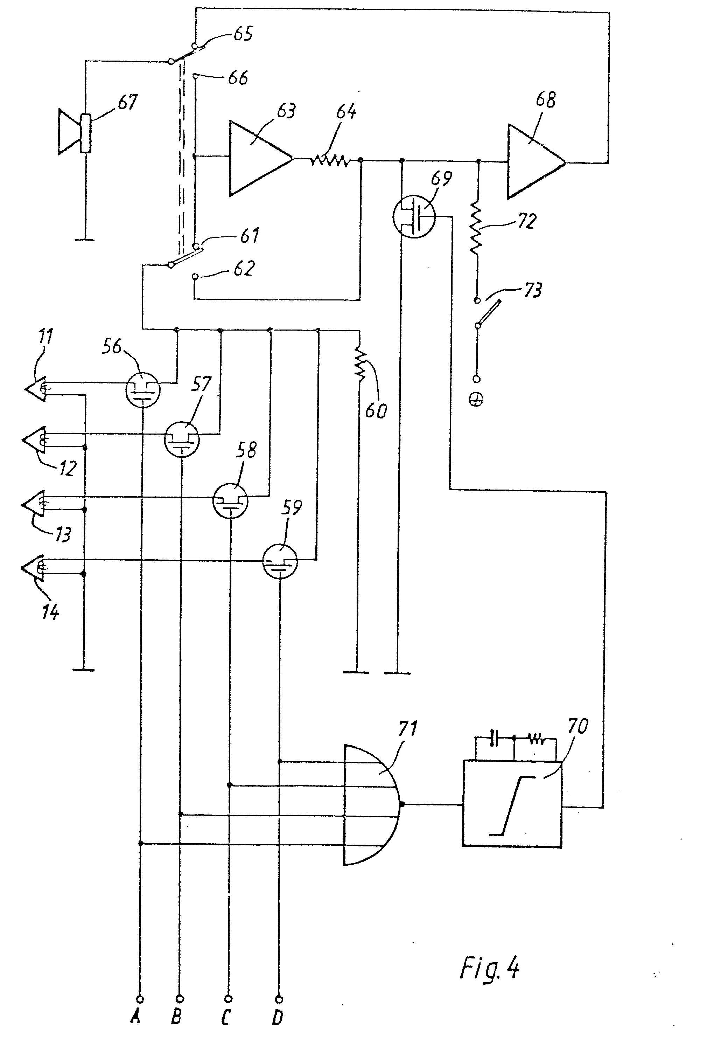

Gemäß Figur 3 ist über einen Hauptschalter 31 Pluspotential an die Schaltungsanordnung anschaltbar. Die den Teilen gemäß Figur 2 entsprechenden Teile sind in Figur 3 und in Figur 4 mit gleichen Bezugzeichen versehen.

Mit 32 ist ein Zwei-Bit-Digitalzähler bezeichnet, dessen Ausgänge A und B für die erste Tonspur die Potentiale « Null », « Null », für die zweite Tonspur die Potentiale « 1 », « Null », für die dritte Tonspur die Potentiale « Null », « 1 » und für die vierte Tonspur die Potentiale « 1 », « 1 » aufweisen. Der Rücksetzeingang R des Digitalzählers 32 ist über den Startschalter 27 mit Pluspotential verbindbar. Der Takteingang T des Digitalzählers 32 ist mit dem Ausgang eines ODER-Gatters 33 verbunden, dessen einer Eingang über eine Impulsformerstufe mit dem Schaltfühler 26 für den linken Randbereich und dessen anderen Eingang über eine Impulsformerstufe mit dem Schaltfühler für den rechten Randbereich des Bildes 3 verbunden ist. Die Impulsformerstufen bestehen jeweils aus einem UND-Gatter 34 bzw. 35, wobei in jeweils einer Eingangsleitung ein Inverter 36 bzw. 37 angeordnet ist.

Vom Ausgang A des Digitalszählers 32 führt über einen Inverter 38 eine erste Verbindung zu einem UND-Gatter 39, des weiteren eine Direktverbindung zu dem ersten Eingang eines weiteren UND-Gatters 40, des weiteren eine Verbindung über einen Inverter 41 zum ersten Eingang eines dritten UND-Gatters 42 und eine direkte Verbindung zum ersten Eingang eines vierten UND-Gatters 43.

Vom Ausgang B des Digitalzählers 32 führt über einen Inverter 44 eine Verbindung zum zweiten Eingang des UND-Gatters 39, über einen Inverter 45 eine Verbindung zum zweiten Eingang des UND-Gatters 40, eine direkte Verbindung zum zweiten Eingang des UND-Gatters 42 und eine direkte Verbindung zum zweiten Eingang des UND-Gatters 43.

Die Ausgänge der UND-Gatters 39, 40, 42 und 43 sind mit Anschlußstellen A, B, C und D verbunden.

Vom Ausgang des ersten und dritten UND-Gatters 39 und 42 führen Verbindungen zu einem ODER-Gatter 46, dessen Ausgang mit dem ersten Eingang eines UND-Gatters 47 verbunden ist. Der weitere Eingang des UND-Gatters 47 ist über einen Inverter 48 mit dem Startschalter 27 verbunden. Vom Ausgang des UND-Gatters 47 führt eine Verbindung zur Basis eines Schalttransistors 49, in dessen Kollektorstromkreis der Elektromagnet 15 angeordnet ist.

Der Ausgang des zweiten und vierten UND-Gatters 40 und 43 ist mit einem ODER-Gatter 50 verbunden, dessen Ausgang mit dem ersten Eingang eines UND-Gatters 51 verbunden ist. Der zweite Eingang des UND-Gatters 51 ist mit dem Ausgang des Inverters 48 verbunden. Vom Ausgang des UND-Gatters 51 führt eine Steuerverbindung zu einem ODER-Gatter 52, dessen zweiter Eingang mit dem Ausgang eines UND-Gatters 53 verbunden ist. Der Ausgang des ODER-Gatters 52 ist an die Basis eines Steuertransistors 54 angeschlossen, in dessen Kollektorstromkreis sich der Elektromagnet 16 befindet.

Der eine Eingang des UND-Gatters 53 ist mit dem Startschalter 27 und der zweite Eingang über einen Inverter 55 mit dem Endabschalter 29 verbunden.

Gemäß Figur 4 führen von den Anschlußstellen A, B, C und D Steuerverbindungen zu Feldeffekttransistoren 56, 57, 58 und 59. Die Feldeffekttransistoren 56 bis 59 befinden sich jeweils im Stromkreis des ihnen zugeordneten Tonkopfes 11, 12, 13, 14. Ein Ableitwiderstand ist mit 60 bezeichnet. Über den Kontakt 61 eines Umschalters 61, 62 sind die gemeinsamen Anschlußstellen der Feldeffekttransistoren 56 bis 59 mit dem Eingang eines Verstärkers 63 verbindbar, in dessen Ausgangsstromkreis ein Arbeitswiderstand 64 vorgesehen ist. Mit dem Umschalter 61, 62 ist ein weiterer Umschalter 65, 66 gekoppelt, über den ein als Mikrofon und Lautsprecher wirkender elektroakustischer Wandler 67 in der gezeigten Schalterstellung mit dem Ausgang eines Endverstärkers 68 verbunden ist.

Der Eingang des Endverstärkers 68 ist über den Widerstand 64 mit dem Ausgang des Vorverstärkers 63 verbunden. In der Schalterstellung 62 des Umschalters 61, 62 führen die Tonspulen 11 bis 14 über ihre entsprechenden Feldeffekttransistoren 56 bis 59 gemeinsam zum Eingang des Verstärkers 68. In der entsprechenden Schalterstellung 66 des Umschalters 65, 66 ist der elektroakustische Wandler 67 mit dem Eingang des Vorverstärkers 63 verbunden. In dieser Schalterstellung wirkt der elektroakustische Wandler 67 als Mikrofon. In der Schalterstellung 65 des Umschalters 65, 66 arbeitet der elektroakustische Wandler als Lautsprecher.

Die Eingangsstromkeise der Tonspulen 11 bis 14 sind durch einen Feldeffekttransistor 69 überbrückbar. Die Steuerelektrode des Feldeffekttransistors 69 ist mit dem Ausgang eines monostabilen Multivibrators 70 verbunden, dessen Eingang mit dem Ausgang eines ODER-Gatters 71 verbunden ist. Die Eingänge des ODER-Gatters 71 führen zu den Anschlußstellen A bis D. Ein Arbeitswiderstand ist mit 72 und ein Schalter mit 73 bezeichnet.

Zur Arbeitsweise der Schaltungsanordnung ist folgendes auszuführen:

Ist kein Stehbild mit Tonträgerschicht in das Gerät 1 eingeführt, so ist der Schalter 27 geschlossen. Der Zähler 32 ist zurückgesetzt. Demzufolge ist das UND-Gatter 47 gesperrt und der Kupplungsmagnet 15 stromlos. Der Schalter 31 wurde zuvor geschlossen, so daß der Motor 5 bestromt und das Endlosband 7 angetrieben ist. Der Endabschalter 29 ist geschlossen, da sich die Tonkopfeinrichtung 10 in der linken Ausgangsstellung befindet. Der Stift 28 hält den Schalter 29 geschlossen. Demzufolge ist das UND-Gatter 53 gesperrt. Gleiches gilt für das ODER-Gatter 52. Demzufolge ist der Transistor 54 gesperrt und der Kupplungsmagnet 16 stromlos.

Wird ein Bild 3 eingeführt, so wird der Startschalter 27 geöffnet und das UND-Gatter 47 durchgesteuert. Folglich wird der Transistor 49 durchgesteuert und der Kupplungsmagnet 15 erregt. Somit ist die Tonkopfeinrichtung 10 mit dem Bestandteil 7a gekuppelt. Am Ende der Tonspur wird der Schalter 23 geschlossen und ein Impuls über die Impulsformerstufe 35, 37 dem ODER-Gatter 33 zugeführt mit der Folgewirkung, daß der Digitalzähler 32 um einen Schritt weitergeschaltet wird. Der Ausgang A behält sein Potential « Null » bei, während der Ausgang B das Potential « 1 » erhält. Dies hat zur Folge, daß der Kupplungsmagnet 15 stromlos wird, während der Kupplungsmagnet 16 bestromt wird. Am Ende der zweiten Spur wird durch Schließen des Schalters 26 ein weiterer Zählimpuls in den Digitalzähler 32 eingegeben, so daß am Ausgang A nunmehr das Potential « 1 » und am Ausgang B das Potential « 1 » und am Ausgang B das Potential « Null » anliegt.

Am Ende der vierten Tonspur wird nach Schließen des Schalters 23 der Digitalzähler 32 in seine Ursprungslage zurückgeschaltet, wobei nach Schließen des Schalters 29 die Tonkopfeinrichtung in ihrer linken Ausgangsstellung verbleibt. Außerdem sind die beiden Kupplungsmagneten 15 und 16 stromlos.

In Abhängigkeit von den Potentialzuständen an den Ausgängen A und B des Zählers 32 wird nacheinander an den Anschlußstellen A, B, C und D das Potential « 1 » anliegen. Demzufolge werden nacheinander die Feldeffekttransistoren 56, 57, 58 und 59 durchgesteuert, wobei jedoch stets nur ein Feldeffekttransistor durchlässig ist. Während der Potentialsprünge an den Anschlußstellen A bis D, was gleichbedeutend einem Tonspurwechsel ist, wird im monostabilen Multivibrator 70 ein Impuls erzeugt, der kurzzeitig die Durchsteuerung des Feldeffekttransistors 69 bewirkt und für diese kurze Zeitspanne den Eingangskreis des Verstärkers 68 kurzschließt. Es wird so verhindert, daß Stör- oder Knackgeräusche aufgezeichnet bzw. wiedergegeben werden.

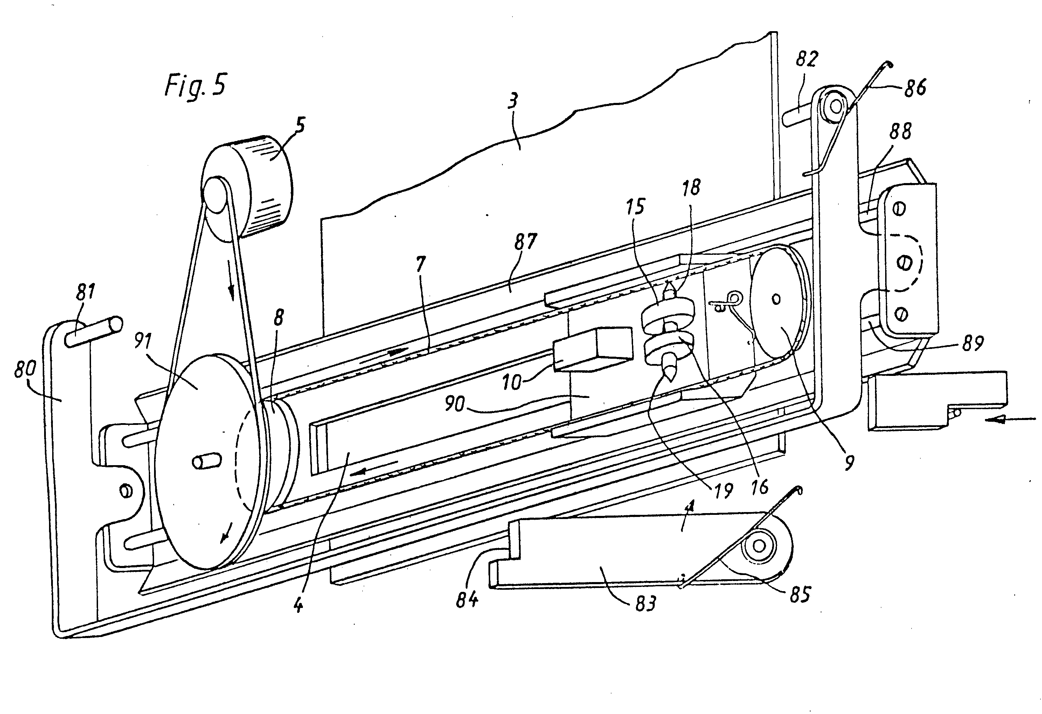

Im Ausführungsbeispiel gemäß Figur 5 sind die den Teilen gemäß Figur 1 entsprechenden Teile mit gleichen Bezugzeichen versehen. Mit 80 ist ein Fallbügel bezeichnet, der an den Stellen 81 und 82 schwenkbar gelagert ist. Mit 83 ist ein Auswerfer bezeichnet, der eine Aussparung 84 aufweist, die den unteren Teil des Bügels 80 hält. Beim Einschieben eines Stehbildes wird der Auswerfer entgegen der Kraft einer Feder 85 nach unten gedrückt. Der Fallbügel 80 wird mittels der an ihm angreifenden Feder 86 verschwenkt und das Stehbild mit der Magnettonschicht 4 gegen eine Unterlage gedrückt. Die Andruckplatte ist mit 87 bezeichnet. Die Andruckplatte weist Führungsstangen 88 und 89 aus. Die Führungsstangen 88 und 89 dienen zur Führung des Schlittens 90 für das Magnetkopfsystems 10. Eine Schwungmasse ist mit 91 bezeichnet.

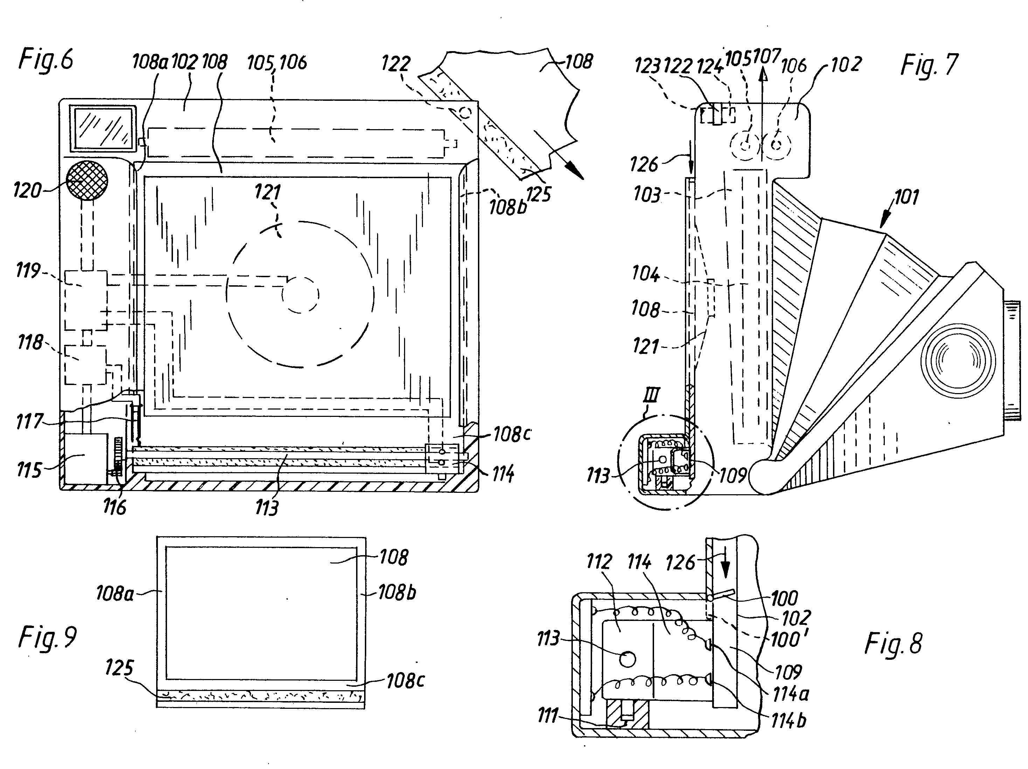

Die Figuren 6 bis 10 zeigen eine Anwendung des Gegenstandes der Erfindung, und zwar in etwas vereinfachter Form, bei einer fotografischen Sofortbildkamera.

Die erfindungsmäße Kamera besteht aus einem

Gehäuse 101, von dem für das Verständnis der vorliegenden Erfindung lediglich das Rückteil 102 von Bedeutung ist. Im Rückteil 102 befindet sich eine Kassette 103 mit eingelagerten Monoblatt-Sofortbildfilmverbänden 104. Dem Ausgabeschlitz der Kassette 103 sind in bekannter Weise zwei Entwicklerwalzen 105 und 106 zugeordnet, die mit einem nicht dargestellten, bekannten Greifermechanismus zusammenwirkend den jeweils obersten Filmverband der Kassette nach der Belichtung in Richtung des Pfeiles 107 aus der Kamera heraustransportieren.

Auf der Rückseite der Kamera ist eine Halterung für einen einzelnen Sofortbildfilmverband 108 angeordnet, die ihn formschlüssig an beiden Seiten 108a und 108b umfaßt und für die untere Kante des Filmverbandes 108 einen Aufnahmeschlitz 109 aufweist, in den das entwicklerbeutelseitige Ende 108c des Sofortbildfilmverbandes 108 einsteckbar ist.

Wie Figur 8 zu entnehmen ist, ist der Aufnahmeschlitz 109 bei nicht eingesetztem Sofortbildfilmverband von einem nach oben federnden Klappdeckel 100 abgeschlossen, der das Eindringen von Schmutz verhindert. Eine Wand des Aufnahmeschlitzes 109 wird von der Kamerarückwand 102 gebildet. An der gegenüberliegenden Seite ist in einer Nut 111 mittels einer Halterung 112 ein Zweispurtonkopf 114 mit den beiden Spalten 114a und 114b verschiebbar gelagert, wobei die Verschiebung durch Drehen einer Spindel 113 mit einem entsprechenden Steilgewinde erfolgt, und zwar je nach Drehrichtung nach links oder rechts gemäß Figur 6.

Zur Drehung der Spindel 113 ist ein Motor 115 mit einem Getriebe 116 vorgesehen, der von der kameraeigenen, nicht dargestellten Stromquelle versorgbar ist. An beiden Endstellungen des Tonkopfes 114 sind Schalter 117 angebracht, von denen der Übersichtlichkeit halber nur einer dargestellt ist. Zur Steuerung des Motors 115 dient eine elektronische Schaltvorrichtung 118, deren Funktionen weiter unten beschrieben werden.

Die Kerne des Magnetkopfes 114, die den Spalten 114a und 114b zugeordnet sind, sind mit einem Verstärker 119 verbunden, von dem entsprechende Anschlüsse zu einem vom Laufgeräusch des Motors 115 und der Spindel 113 isolierten eingebauten Mikrofon 120 sowie zu einem Lautsprecher 121 führen, der in der Kamerarückwand eingebaut ist.

Ferner weist der Kamerarückteil 102 an einer Ecke einen Schlitz 122 auf, zu dessen beiden Seiten Permanentmagnete 123 und 124 angeordnet sind. Der Schlitz 122 ist so breit, daß der Filmverband 108 hindurchgezogen werden kann und so tief, daß eine magnetisierbare Spur 125 am Bildrand 108c des Filmverbandes 108 in ihrer Breite vom Magnetfeld erfaßt werden kann.

Die Wirkungsweise der beschriebenen Vorrichtung ist folgende:

Der in der Kamera belichtete oberste Filmverband der Kassette 103 wird in bekannter Weise in Richtung des Pfeiles 107 aus der Kamera heraustransportiert. Anschließend wird er in die Halterung auf der Kamerarückseite in Richtung des Pfeiles 126 eingeschoben, wobei der magnetisierbare Bereich 125 des Bildrandes 108c zur Anlage an die Spalte 114a und 114b des in der dargestellten Ausgangsposition befindlichen Magnetkopfes 114 kommt, nachdem er die Staubschutzklappe 100 in die gestrichelte Position 100' gestellt hat.

Durch Betätigen einer nicht dargestellten Handhabe setzt der Benutzer den Verstärker 119 in der Funktion als Verstärker der vom Mikrofon 120 erzeugten Signale und deren Weitergabe an den Spalt 114a in Betrieb.

Gleichzeitig wird die Spindel 113 durch eine vom Steuergerät 118 bestimmte Drehrichtung des Motors 115 so gedreht, daß der Tonkopf 114 an seiner Halterung 112 auf Figur 6 bezogen nach links wandert. Dabei erfolgt in bekannter Weise durch Magnetisieren einer Spur auf dem Streifen 125 die Aufzeichnung der in das Mikrofon 120 gelangenden akustischen Informationen.

Hat der Tonkopf 114 den Schalter 117 erreicht, so wird sich der Tonkopf wieder in seine Ausgangslage bewegen. Bei dieser Laufrichtung wird der andere Spalt 114b angesteuert, so daß während des Rücklaufes eine zweite Spur des Streifens 125 besprochen wird. In der Ausgangsstellung wird über einen nicht dargestellten Schalter die Drehrichtung des Motors und die Spaltansteuerung unter Stehenbleiben des Antriebes wieder umgeschaltet.

Durch eine weitere, getrennte Bedienungshandhabe kann der Benutzer den Tonkopf 109 bei Wiederholung der Bewegungen als Lesekopf schalten, wobei der Verstärker 119 die aufgezeichneten Informationen über den Lautsprecher 121 wiedergibt. Gefällt dem Benutzer die Aufzeichnung nicht, entfernt er den Filmverband aus der Halterung und zieht ihn mit der Kante 108c rasch durch den Schlitz 122. Im Feld der Magnete 123 und 124 wird die Aufzeichnung gelöscht und der Vorgang des Aufsprechens kann von neuem begonnen werden.

Die Erfindung ist nicht auf das beschriebene Ausführungsbeispiel beschränkt. So kann auch ein Tonkopf mit nur einem oder mit mehr als zwei Spalten für eine entsprechende Spurenanzahl verwendet werden, wobei die Steuervorrichtung 118 und der Verstärker entsprechend angelegt werden müssen. Ferner kann auf die Löschungsmöglichkeit mit den Permanentmagneten verzichtet und wenigstens ein zusätzlicher Löschkopf oder bei einem Löschdurchlauf der Tonkopf als Löschkopf verwendet werden, wobei die zu den Spalten gehörenden Kerne in an sich bekannter Weise mit Strom einer Frequenz außerhalb der Tonfrequenzen vom Verstärker 119 versorgt wird. Ferner ist es auch möglich, den Lautsprecher und das Mikrofon in an sich bekannter Weise zu kombinieren und die Trennung der Funktion entsprechend vorzunehmen.

**Ansprüche**

1. Aufnahme- und/oder Wiedergabegerät für mit einem magnetisierbaren Bereich versehene Informationsträger, vorzugsweise für Stehbildinformationsträger, mit einer Haltevorrichtung zur reproduzierbaren Halterung des Informationsträgers mit einer mehrere Tonköpfe aufweisenden Tonkopfeinrichtung zum Schreiben bzw. Lesen von digitalen oder analogen Signalen des Informationsträgers, dadurch gekennzeichnet, daß jeder Tonkopf (11 bzw. 12 bzw. 13 bzw. 14) der Tonkopfeinrichtung (10) jeweils einer Schreib- bzw. Lesespur zugeordnet ist, daß die Tonkopfeinrichtung (10) mittels einer Linear-Transportvorrichtung (7, 7a, 7b, 15 bis 20) über dem magnetisierbaren Bereich (4) des Informationsträgers (3) stets längs der gleichen Bahn hin- und herbewegbar ist, und daß eine elektronische Steuer- und Auswerteschaltung vorgesehen ist, durch die zum aufeinanderfolgenden Aufzeichnen bzw. Abtasten der einzelnen Tonspuren nach jeder Bewegungsumkehr der Tonkopfeinrichtung (10) vom zuvor wirksam geschalteten Tonkopf (z.B. 11) auf den jeweils nächstfolgenden Tonkopf (12) umgeschaltet wird.

2. Aufnahme- und/oder Wiedergabegerät nach Anspruch 1, dadurch gekennzeichnet, daß die Linear-Transportvorrichtung eine stets in einer Drehrichtung arbeitende Antriebsvorrichtung (5, 8, 9, 7), mindestens zwei in jeweils entgegengesetzter Richtung durch die Antriebsvorrichtung bewegbare Transportmittel (7, 7a, 7b) und eine Kupplungsvorrichtung (15 bis 20) aufweist, durch die die Tonkopfeinrichtung (10) abwechselnd mit dem einen oder anderen Transportmittel (7a bzw. 7b) kuppelbar ist.

3. Aufnahme- und/oder Wiedergabegerät nach Anspruch 2, dadurch gekennzeichnet, daß die Linear-Transportvorrichtung eine durch einen Motor angetriebene Endlosschleife aufweist und daß die Kupplungseinrichtung ein in Höhe des einen Schleifenteiles (7a) angeordnetes erstes elektromagnetisches Kupplungsteil (15, 17, 18) sowie ein in Höhe des in entgegengesetzter Richtung laufenden Schleifenteiles (7b) angeordnetes zweites elektromagnetisches Kupplungsteil (16, 19, 20) aufweist.

4. Aufnahme- und oder Wiedergabegerät nach Anspruch 3, dadurch gekennzeichnet, daß die Endlosschleife als Schnurzug, als Kette oder als Band ausgebildet ist.

5. Aufnahme- und oder Wiedergabegerät nach Anspruch 4, dadurch gekennzeichnet, daß das Endlosband zumindest teilweise aus flexiblem, magnetisch leitfähigem Material ausgebildet ist.

6. Aufnahme- und/oder Wiedergabegerät nach einem der Ansprüche 2 bis 5, dadurch gekennzeichnet, daß die Tonkopf- und Kupplungseinrichtung (10, 15 bis 20) mit Schaltfühlern (21, 24) versehen ist, die bei Erreichen des Tonaufzeichnungsträgerrandes einen Schalt- bzw. Steuerimpuls abgeben.

7. Aufnahme- und/oder Wiedergabegerät nach Anspruch 1, dadurch gekennzeichnet, daß ein beim Einführen des Informationsträgers (3) in das Aufnahme- und/oder Wiedergabegerät betätigbarer Startschalter (27) vorgesehen ist, durch den die Steuer- und Auswerteschaltung aktiviert wird.

8. Aufnahme- und/oder Wiedergabegerät nach Anspruch 7, dadurch gekennzeichnet, daß die Steuer- und Auswerteschaltung einen Digitalzähler (32) aufweist, dessen maximaler Zählinhalt gleich der Anzahl der nebeneinander stehenden Aufzeichnungs- und Wiedergabespuren ist.

9. Aufnahme- und/oder Wiedergabegerät nach Anspruch 8, dadurch gekennzeichnet, daß der Takteingang des Digitalzählers (32) über eine ODER-Verknüpfung (33) mit zwei Steuerschaltern (26, 23) verbunden ist, von denen jeder eines der beiden Tonspurenden signalisiert.

10. Aufnahme- und/oder Wiedergabegerät nach Anspruch 8 oder 9, dadurch gekennzeichnet, daß die Ausgänge des Digitalzählers (32) über eine der Anzahl der Tonspuren entsprechende Anzahl von Auswertegattern (39 bis 43) mit im Stromkreis der einzelnen Tonspulen (11 bis 14) befindlichen steuerbaren Halbleiterschaltern (56 bis 59) verbunden sind.

11. Aufnahme- und/oder Wiedergabegerät nach den Ansprüchen 3 und 10, dadurch gekennzeichnet, daß die den geradzahligen Tonspuren zugeordneten benachbarten Auswertegatter (39, 42) und die den ungeradzahligen Tonspuren zugeordneten benachbarten Auswertegatter (40, 43) jeweils über weitere Verknüpfungsstufen (46, 50 und 51, 52, 47) mit je einem steuerbaren, den Elektromagneten der Kupplungsvorrichtung beeinflussenden Halbleiterschalter (54, 49) verbunden sind.

12. Aufnahme- und/oder Wiedergabegerät nach Anspruch 11, dadurch gekennzeichnet, daß die weiteren Verknüpfungsstufen mittels des bei eingeführtem Stehbildinformationsträger betätigtem Startschalters (27) vorbereitend durchsteuerbar sind.

13. Aufnahme- und/oder Wiedergabegerät nach einem der Ansprüche 2 bis 6, dadurch gekennzeichnet, daß die Kupplungswirkung der Kupplungsvorrichtung bei vorzeitigem Herausnehmen des Stehbildinformationsträgers aus dem Aufnahme- bzw. Wiedergabegerät mit Hilfe eines durch die Tonkopfeinrichtung (10) betätigbaren Endabschalters (29) aufgehoben wird, wenn die Tonkopfeinrichtung (10) eine vorgegebene Anfangsstellung erreicht hat.

14. Aufnahme- und/oder Wiedergabegerät nach Anspruch 7 und 13, dadurch gekennzeichnet, daß bei betätigtem Endabschalter (29) und bei unbetätigtem Startschalter (27) eine im Falle der Betätigung beider Schalter durchgesteuerte Tonstufe (53 bzw. 52) gesperrt und die Bestromung der Kupplungseinrichtung unterbrochen ist.

15. Aufnahme- und/oder Wiedergabegerät nach einem der Ansprüche 2 bis 6, dadurch gekennzeichnet, daß die Tonkopfeinrichtung (10) sowie die Kupplungsvorrichtung auf einem gemeinsamen Schlitten angeordnet sind.

16. Aufnahme- und/oder Wiedergabegerät nach Anspruch 10 oder 11, dadurch gekenn-

zeichnet, daß von den Zuleitungen zu den steuerbaren Halbleiterschaltern (56 bis 59) der Tonkopfspulen je eine Steuerverbindung zu einem ODER-Gatter (71) führt, das mit einer monostabilen Kippstufe (70) verbunden ist, durch die während jedes Spurwechsels für eine kurze Zeitspanne die Aufzeichnung bzw. Wiedergabe unterbrochen wird.

17. Verwendung eines Aufnahme- und/oder Wiedergabegerätes nach Anspruch 1 in einer fotografischen Sofortbildkamera, dadurch gekennzeichnet, daß die Tonkopfeinrichtung (114) mittels einer Spindel (113) vorzugsweise an einen Bildrand (118c) auf der Vorder- und/oder Rückseite des Sofortbildträgers (108), auf dem sich der magnetisierbare Bereich (125) befindet, entlangführbar ist, daß die Tonkopfeinrichtung (114) elektro- oder federmotorisch angetrieben ist und daß die Drehrichtung des Elektro- oder Federmotors mittels eines Endschalters (117) nach dem ersten Lauf der Tonkopfeinrichtung (114) entlang des Bildrandes (108c) umkehrbar ist, wobei bei der Richtungsumkehr das elektromagnetische Schreib- bzw. Lesespursignal auf einen weiteren Tonkopf (114b) der Tonkopfeinrichtung (114) und bei Erreichen der letzten Schreib- bzw. Lesespur wieder auf den ersten Tonkopf (114a) geschaltet wird.

18. Verwendung eines Aufnahme- und/oder Wiedergabegerät nach Anspruch 17, dadurch gekennzeichnet, daß am Kameragehäuse ein Schlitz (122) vorgesehen ist, dessen Wände mit wenigstens einem Permanentmagneten (123, 124) versehen sind, und daß der Schlitz (122) breiter als der verwendbare Bildträger (108) stark und tiefer als der magnetisierbare Bereich (125) des letzteren breit ist.

## Claims

1. A recording and/or reproduction unit for storage media provided with a magnetizable region, preferably for still picture storage media, with a holding device for holding the storage medium in a reproducible manner and comprising a sound head device provided with a plurality of sound heads for recording or reading, respectively, digital or analog signals of the storage medium, characterised in that a recording or reading track, respectively, is in each case associated with each sound head (11 or 12 or 13 or 14) of the sound head device (10), that the sound head device (10) can be moved to-and-fro, always along the same path, over the magnetizable region (4) of the storage medium (3) by means of a linear conveying device (7, 7a, 7b, 15 to 20) and in that an electronic control and evaluation circuit is provided for changing over from the previously operatively connected sound head (e.g. 11) to the respective following sound head (12) for successive recording or sensing of the individual sound tracks after each change of movement of the sound head device (10).

2. A recording and/or reproduction unit according to Claim 1, characterised in that the linear conveying device comprises a drive device (5, 8, 9, 7), which always operates in one direction of rotation, at least two conveying means (7, 7a, 7b), which can in each case be moved in the opposite direction by the drive device, and a coupling device (15 to 2), by means of which the sound head device (10) can alternately be coupled to one or other of the conveying means (7a to 7b).

3. A recording and/or reproduction unit according to Claim 2, characterised in that the linear conveying device comprises an endless loop driven by a motor and that the coupling device comprises a first electromagnetic coupling part (15, 17, 18) arranged at the level of one loop part (7a) and a second electromagnetic coupling part (16, 19, 20) arranged at the level of the loop part (7b) running in the opposite direction.

4. A recording and/or reproduction unit according to Claim 3, characterised in that the endless loop is formed as a cord, as a chain or as a belt.

5. A recording and/or reproduction unit according to Claim 4, characterised in that the endless belt is formed at least partially of a flexible, magnetically conductive material.

6. A recording and/or reproduction unit according to one of Claims 2 to 5, characterised in that the sound head and coupling device (10, 15 to 20) is provided with switching sensors (21, 24) which deliver a switching or control pulse when the edge of the sound recording carrier is reached.

7. A recording and/or reproduction unit according to Claim 1, characterised in that a starting switch (27), which can be actuated upon the insertion of the storage medium (3) in the recording and/or reproduction unit, is provided to activate the control and evaluation circuit.

8. A recording and/or reproduction unit according to Claim 7, characterised in that the control and evaluation circuit comprises a digital counter (32), the maximum counting capacity of which is equal to the number of adjacent recording and reproduction tracks.

9. A recording and/or reproduction unit according to Claim 8, characterised in that the clock input of the digital counter (32) is connected via an OR-connection (33) to two control switches (26, 23), each of which signals one of the two sound track ends.

10. A recording and/or reproduction unit according to Claim 8 or 9, characterised in that the outputs of the digital counter (32) are connected via a number of evaluation gates (39 to 43) corresponding to the number of sound tracks to controllable semiconductor switches (56 to 59) disposed in the circuit of the individual sound reels (11 to 14).

11. A recording and/or reproduction unit according to Claims 3 to 10, characterised in that the adjacent evaluation gates (39, 42) associated with the even-numbered sound tracks and the adjacent evaluation gates (40, 43) associated with the odd-numbered sound tracks are in each case connected via further connection stages (46, 50 and 51, 52, 47) to a respective controllable semiconductor switch (54, 49), which influences the electromagnets of the coupling device.

12. A recording and/or reproduction unit according to Claim 11, characterised in that the further connection stages can be preliminarily controlled by means of the starting switch (27) which is actuated when the still picture storage medium is inserted.

13. A recording and/or reproduction unit according to one of Claims 2 to 6, characterised in that, when the still picture storage medium is prematurely withdrawn from the recording or reproduction unit, the coupling effect of the coupling device is counterbalanced by means of a limit switch (29), which can be activated by the sound head device (10), when the sound head device (10) has reached a predetermined initial position.

14. A recording and/or reproduction unit according to Claims 7 and 13, characterised in that, when the limit switch (29) is actuated and the starting switch (27) is not actuated, a sound stage (53 or 52), which is advance controlled when both switches are actuated, is cut off and the current of the coupling device is interrupted.

15. A recording and/or reproduction unit according to one of Claims 2 to 6, characterised in that the sound head device (10) and the coupling device are arranged on a common carriage.

16. A recording and/or reproduction unit according to Claim 10 or 11, characterised in that a respective control connection leads from the supply lines to the controllable semiconductor switches (56 to 59) of the sound head reels to an OR gate (71), which is connected to a monostable flip-flop unit (70), by means of which recording or reproduction is briefly interrupted during each track change.

17. Use of a recording and/or reproduction unit according to Claim 1 in a photographic instant image camera, characterised in that the sound head device (114) can be guided along on the front and/or back side of the instant image carrier (108), on which the magnetizable region (125) is disposed, preferably at one image margin (108c), tht the sound head device (114) is driven by an electric or spring motor and that the direction of rotation of the electric or spring motor can be reversed by means of a limit switch (117) after the first movement of the sound head device (114) along the image margin (108c), electromagnetic recording or reading track signal, respectively, being switched to a further sound head (114b) of the sound head device (114) when the direction is reversed and back to the first sound head (114a) when the last recording or reading track, respectively, is reached.

18. Use of a recording and/or reproduction unit according to Claim 17, characterised in that a slit (122) is provided in the camera housing, the walls of which slit are provided with at least one permanent magnet (123, 124) and that the slit (122) is wider than the thickness of the usable image carrier (108) and deeper than the width of the magnetizable region (125) of the latter.

## Revendications

1. Appareil d'enregistrement et/ou de reproduction pour des supports d'informations, de préférence pour des supports d'informations d'images photographiques pourvus de plages aimantables, du type comportant un dispositif d'arrêt pour l'arrêt reproductible du support d'enregistrement, ainsi qu'un dispositif à têtes magnétiques, pourvu de plusieurs têtes magnétiques, pour l'écriture et la lecture de signaux numériques ou analogiques du support d'enregistrement, caractérisé par le fait que chaque tête magnétique (11, 12, 13, 14) du dispositif à têtes magnétiques (10) est associée à une piste d'écriture et de lecture, que le dispositif à têtes magnétiques (10) est susceptible, à l'aide d'un dispositif de transport linéaire (7, 7a, 7b, 15 à 20), d'être déplacé dans un ou dans l'autre sens sur la plage (4) aimantable du support d'informations (3), et toujours le long de la même piste, et qu'il est prévu un circuit électronique de commande et d'évaluation à l'aide duquel on procède à une commutation de la tête magnétique (par exemple 11) activée précédemment, sur la tête magnétique suivante (12) pour l'enregistrement ou la lecture des différentes pistes sonores après chaque inversion du déplacement du dispositif à têtes magnétiques (10).

2. Appareil d'enregistrement et/ou de reproduction selon la revendication 1, caractérisé par le fait que le dispositif de transport linéaire comporte un dispositif d'entraînement (5, 8, 9, 7) opérant toujours dans le même sens de rotation, au moins deux moyens de transport (7, 7a, 7b) déplaçables par le dispositif d'entraînement respectivement dans des directions opposées, et un dispositif d'accouplement (15 à 20) à l'aide duquel le dispositif à têtes magnétiques (10) est susceptible d'être accouplé alternativement avec l'un ou l'autre des moyens de transport (7a, 7b).

3. Appareil d'enregistrement et/ou de reproduction selon la revendication 2, caractérisé par le fait que le dispositif de transport linéaire comporte une boucle sans fin entraînée par un moteur et que le dispositif d'accouplement comporte un premier élément d'accouplement magnétique (15, 17, 18) disposé à la hauteur de l'un des éléments (7a) de la boucle, ainsi qu'un second élément d'accouplement magnétique (16, 19, 20) disposé au niveau de l'élément de boucle (7b) se déplaçant dans la direction opposée.

4. Appareil d'enregistrement et/ou de reproduction selon la revendication 3, caractérisé par le fait que la boucle sans fin est constituée par un câble de transmission ou moufle, par une chaîne ou par un ruban.

5. Appareil d'enregistrement et/ou de reproduction selon la revendication 4, caractérisé par le fait que le ruban sans fin est constitué au moins en partie avec un matériau flexible à conductibilité magnétique.

6. Appareil d'enregistrement et/ou de reproduction selon l'une des revendications 2 à 5, caractérisé par le fait que le dispositif à têtes magnétiques et d'accouplement (10, 15 à 20) est pourvu de détecteurs de commutation (21, 24) qui émettent, lorsqu'ils atteignent le bord du support d'enregistrement du son, une impulsion de commutation et de commande.

7. Appareil d'enregistrement et/ou de reproduction selon la revendication 1, caractérisé par le fait qu'il est prévu un interrupteur de démarrage (27) qui est actionné lors de l'introduction du support d'enregistrement (3) dans l'appareil d'enregistrement et de reproduction, et à l'aide duquel est activé le circuit de commande et d'évaluation.

8. Appareil d'enregistrement et/ou de reproduction selon la revendication 7, caractérisé par le fait que le circuit de commande et d'évaluation comporte un compteur numérique (32) dont le contenu de comptage maximum est égal au nombre de pistes d'enregistrement et de reproduction disposées les unes à côté des autres.

9. Appareil d'enregistrement et/ou de reproduction selon la revendication 8, caractérisé par le fait que l'entrée de cadence du compteur numérique (32) est reliée par un circuit OU (33) à deux interrupteurs de commande (26, 23) dont chacun signale l'une des deux extrémités des pistes sonores.

10. Appareil d'enregistrement et/ou de reproduction selon la revendication 8 ou 9, caractérisé par le fait que les sorties du compteur numérique (32) sont reliées par un nombre de portes d'évaluation (39 à 43) correspondant au nombre de pistes sonores, à des interrupteurs à semiconducteurs commandés (56 à 59), disposés dans le circuit des différentes pistes sonores (11 à 14).

11. Appareil d'enregistrement et/ou de reproduction selon les revendications 3 et 10, caractérisé par le fait que les portes d'évaluation voisines (39, 42), associées aux pistes sonores d'ordre pair et les portes d'évaluation voisines (40, 43), associées aux pistes sonores d'ordre impair sont respectivement reliées, par d'autres étages à circuits logiques (46, 50 et 51, 52, 47), à un interrupteur à semiconducteurs commandé, agissant sur l'entraînement du dispositif d'accouplement.

12. Appareil d'enregistrement et/ou de reproduction selon la revendication 11, caractérisé par le fait que lesdits autres étages à circuits logiques sont susceptibles d'être commandés dans un état de préparation à l'aide de l'interrupteur de démarrage (27) actionné par l'introduction du support d'informations de l'image photographique.

13. Appareil d'enregistrement et/ou de reproduction selon l'une des revendications 2 à 6, caractérisé par le fait que l'effet d'accouplement du dispositif d'accouplement, et lors de l'enlèvement prématuré du support d'informations de l'image photographique de l'appareil d'enregistrement et/ou de reproduction, est supprimé à l'aide d'un interrupteur de fin de course (29) actionné par le dispositif à têtes magnétiques (10) lorsque ce dernier a atteint une position de départ fixée à l'avance.

14. Appareil d'enregistrement et/ou de reproduction selon les revendications 7 et 13, caractérisé par le fait que lorsque l'interrupteur de fin de course (29) est actionné et lorsque l'interrupteur de démarrage (27) n'est pas actionné, un étage de portes (53, 52), activé lorsque ces deux interrupteurs sont actionnés, est bloqué et l'alimentation en courant de l'accouplement est interrompue.

15. Appareil d'enregistrement et/ou de reproduction selon l'une des revendications 2 à 6, caractérisé par le fait que le dispositif à têtes magnétiques (10) et le dispositif d'accouplement sont montés sur un chariot commun.

16. Appareil d'enregistrement et/ou de reproduction selon la revendication 10 ou 11, caractérisé par le fait qu'à partir de chacun des conducteurs d'alimentation des interrupteurs à semiconducteurs commandés (56 à 59) des bobines des têtes magnétiques, une liaison de commande mène à une porte OU (71) qui est reliée à un multivibrateur monostable (70) à l'aide duquel l'enregistrement ou la reproduction est interrompu pour un court instant pendant chaque changement de piste.

17. Mise en œuvre d'un appareil d'enregistrement et/ou de reproduction selon la revendication 1, dans un appareil photographique à développement instantané, caractérisée par le fait que le dispositif à têtes magnétiques (114) est susceptible d'être déplacé à l'aide d'une broche (113) de préférence sur un bord (118c) de la face antérieure et/ou postérieure du support de l'image à développement instantané, sur lequel se trouve la plage (25) aimantable, que le dispositif à têtes magnétiques (114) est entraîné par un moteur électrique ou à ressorts et que le sens de rotation du moteur électrique ou à ressorts est susceptible d'être inversé à l'aide d'un interrupteur de fin de course (118) après la première course du dispositif à têtes magnétiques (114) le long du bord de l'image (108c), la réalisation étant telle que lors de l'inversion du sens de rotation, le signal électromagnétique d'écriture ou de lecture est commuté sur une autre tête magnétique (114b) du dispositif à têtes magnétiques (114) et à nouveau sur la première tête magnétique (114a), après que soit atteinte la dernière piste d'écriture ou de lecture.

18. Mise en œuvre d'un appareil d'enregistrement et/ou de reproduction selon la revendication 17, caractérisée par le fait que le boîtier de la caméra présente une fente (122) dont les parois sont pourvues d'au moins un aimant permanent (123, 124), et que la fente (122) est plus large que l'épaisseur du support d'image (108) utilisé et est plus profonde que la largeur de la plage aimantable (125) dudit support.

0 009 673

Fig.1

Spur 1
Spur 2
Spur 3
Spur 4

Fig.2

1

Fig.3

Fig. 4

Fig. 5

0 009 673

Fig.6

108a 102 108   105,106   122   108

120

119

118

117

115

116   113   108c   114

121

108b 125

Fig.7   123 122 124 105 107 106 102

126
103
104
108
121

101

III

113   109

0 009 673

5

Fig.9

108a   108
        108b
125     108c

Fig.8   112 114 126

113
111

100
102
100'
109
114a
114b